# EUROPÄISCHE PATENTSCHRIFT

(11) **EP 0 514 768 B1**
(45) Veröffentlichungstag und Bekanntmachung des Hinweises auf die Patenterteilung: **11.09.1996**
(21) Anmeldenummer: 92108144.4
(22) Anmeldetag: 14.05.1992
(51) Int. Cl.: A01N 47/36, A01N 25/04

(54) **Wässrige Dispersionen von Sulfonylharnstoffderivaten**
Aqueous dispersions of sulfonylurea derivatives
Dispersions aqueuses des dérivés de sulfonylurée

(30) Priorität: 18.05.1991 DE 4116441
(43) Veröffentlichungstag der Anmeldung: 25.11.1992
(73) Patentinhaber: Hoechst Schering AgrEvo GmbH, 13342 Berlin (DE)
(72) Erfinder: Frisch, Gerhard, Dr., W-6393 Wehrheim/Ts. (DE); Maier, Thomas, Dr., W-6000 Frankfurt am Main (DE)

(56) Entgegenhaltungen:
- EP-A- 0 131 258
- EP-A- 0 163 598
- EP-A- 0 318 276
- EP-A- 0 420 497
- WO-A-88/02598
- H.H.Mark, N.M.Bikales, C.G.Overberger, G.Menges: Encyclopedia of Polymer Science and Engineering, vol.1: A to Amorphous Polymers, 1985, New York US, J.Wiley & Sons, Seiten 211-231

## Beschreibung

Die Erfindung betrifft wäßrige Zubereitungen von Sulfonylharnstoffderivaten.

Wirkstoffe aus der Sulfonylharnstoff-Reihe wurden bisher insbesondere als WP (wettable powder) oder WG (waterdispersable granulate) formuliert. Die bisherigen Versuche von dieser Substanzklasse wäßrige Suspensionen herzustellen, wobei der Wirkstoff in fester Form fein in der wäßrigen Phase dispergiert ist, erwiesen sich als schwierig. Ein Grund dafür dürfte in der zum Teil sehr starken Hydrolyseempfindlichkeit dieser Verbindungen liegen. Aus EP-A-124 295 ist bekannt, mit geeigneten und verträglichen anorganischen Säuresalzen oder bestimmten Carbonsäuresalzen brauchbare wäßrige Formulierungen in einem pH-Bereich von 6 - 10 herzustellen. Hierbei müssen jedoch genaue Konzentrationsbedingungen und Temperaturen eingehalten werden, die die Sache aufwendig machen.

Es wurde nun überraschenderweise gefunden, daß sich wäßrige Dispersionen der genannten Wirkstoffe auf einfache Weise mit Hilfe von Tensiden aus der Klasse der Polyacrylsäurederivate herstellen lassen. Diese Formulierungen sind außergewöhnlich lagerstabil. Die wäßrigen Formulierungen von Amidosulfuron (3-(4,6-dimethoxy-pyrimidin-2-yl)-1-(N-methylsulfphonyl)-harnstoff) z. B. sind im Bereich von -10 °C bis 40 °C mindestens 3 Monate lagerstabil und bauen chemisch nicht ab. Bei dreimonatiger Lagerung bei 50 °C kann es zu einem geringfügigen chemischen Abbau der Substanz kommen, der die Stabilität der Suspension nicht gefährdet. Die genannten Tenside schützen den fein suspendierten Wirkstoff in der Weise, daß das Auftreten von Hydrolyse des Wirkstoffes nahezu gänzlich unterbunden wird. Sie entfalten ihre Schutzwirkung auch in Kombination mit einem oder mehreren zusätzlichen Tensiden.

In Mark et al., Encyclopedia of Polymer Science and Engineering, Vol. 1, J. Wiley & Sons, New York 1985, Seiten 211-234 werden die Herstellung, die Eigenschaften und die Verwendung von Acrylsäure- Polymeren und -Copolymeren beschrieben.

Aus EP-A-318276 und WO-A-88/02598 sind wäßrige Dispersionen von Sulfonylharnstoffherbiziden mit Polyacrylsäurederivaten als Verdicker bekannt. Im Vergleich zu Polyacrylsäurederivat-Tensiden unterscheiden sich diese, beispielsweise im Polymerisationsgrad und/oder Vernetzungsgrad.

Die Erfindung betrifft daher wäßrige, herbizide Zubereitungen, die mindestens einen herbiziden Wirkstoff aus der Sulfonylharnstoff-Reihe und mindestens ein Tensid aus der Klasse der Polyacrylsäurederivate enthalten.
Als Herbizide aus der Sulfonylharnstoff-Reihe kommen in Frage Pyrimidin-oder Triazinylaminocarbonyl-[benzol-, pyridin-, pyrazol-, thiophen- und (alkylsulfonyl)alkylamino-]-sulfamide. Bevorzugt als Substituenten am Pyrimidinring oder Triazinring sind Alkoxy, Alkyl, Haloalkoxy, Haloalkyl, Halogen oder Dimethylamino, wobei alle Substituenten unabhängig voneinander kombinierbar sind. Bevorzugte Substituenten im Benzol-, Pyridin-, Pyrazol-, Thiophen-oder (Alkylsulfonyl)alkylamino-Teil sind Alkyl, Alkoxy, Halogen, Nitro, Alkoxycarbonyl, Aminocarbonyl, Alkylaminocarbonyl, Dialkylaminocarbonyl, Alkoxyaminocarbonyl, Alkyl, Alkoxyaminocarbonyl, Haloalkoxy, Haloalkyl, Alkylcarbonyl, Alkoxyalkyl, (Alkansulfonyl)alkylamino.

Geeignete Sulfonylharnstoffe sind beispielsweise
B1) Phenyl- und Benzylsulfonylharnstoffe und verwandte Verbindungen, z.B. 1-(2-Chlorphenylsulfonyl)-3-(4-methoxy-6-methyl-1,3,5-triazin-2-yl)-harnstoff (Chlorsulfuron),
   1-(2-Ethoxycarbonylphenylsulfonyl)-3-(4-chlor-6-methoxypyrimidin-2-yl)-harnstoff (Chlorimuron-ethyl),
   1-(2-Methoxyphenylsulfonyl)-3-(4-methoxy-6-methyl-1,3,5-triazin-2-yl)-harnstoff (Metsulfuron-methyl),
   1-(2-Chlorethoxy-phenylsulfonyl)-3-(4-methoxy-6-methyl-1,3,5-triazin-2-yl)-harnstoff (Triasulfuron),
   1-(2-Methoxycarbonyl-phenylsulfonyl)-3-(4,6-dimethyl-pyrimidin-2-yl)-harnstoff (Sulfometuron-methyl),
   1-(2-Methoxycarbonylphenylsulfonyl)-3-(4-methoxy-6-methyl-1,3,5-triazin-2-yl)-3-methylharnstoff (Tribenuron-methyl),
   1-(2-Methoxycarbonylbenzylsulfonyl)-3-(4,6-dimethoxy-pyrimidin-2-yl)-harnstoff (Bensulfuron-methyl),
   1-(2-Methoxycarbonylphenylsulfonyl)-3-(4,6-bis-(difluormethoxy)-pyrimidin-2-yl)-harnstoff (Pirimisulfuron-methyl),
   3-(4-Ethyl-6-methoxy-1,3,5-triazin-2-yl)-1-(2,3-dihydro-1,1-dioxo-2-methylbenzo[b]thiophen-7-sulfonyl)-harnstoff (s. EP-A-79683),
   3-(4-Ethoxy-6-ethyl-1,3,5-triazin-2-yl)-1-(2,3-dihydro-1,1-dioxo-2-methylbenzo[b]thiophen-7-sulfonyl)-harnstoff (s. EP-A-79683),
B2) Thienylsulfonylharnstoffe, z.B.
   1-(2-Methoxycarbonylthiophen-3-yl)-3-(4-methoxy-6-methyl-1,3,5-triazin-2-yl)-harnstoff (Thifensulfuron-methyl),
B3) Pyrazolylsulfonylharnstoffe, z.B.
   1-(4-Ethoxycarbonyl-1-methylpyrazol-5-yl-sulfonyl)-3-(4,6-dimethoxypyrimidin-2-yl)-harnstoff (Pyrazosulfuron-methyl),
   Methyl-3-chlor-5-(4,6-dimethoxypyrimidin-2-ylcarbamoylsulfamoyl)-1-methyl-pyrazol-4-carboxylat (s. EP-A-282613),
B4) Sulfondiamid-Derivate, z.B.
   3-(4,6-Dimethoxypyrimidin-2-yl)-1-(N-methyl-N-methylsulfonylaminosulfonyl)-harnstoff (Amidosulfuron) und Strukturanaloge (s. EP-A-0131258 und Z. Pfl. Krankh. Pfl. Schutz, Sonderheft XII, 489-497 (1990)),
B5) Pyridylsulfonylharnstoffe, z.B.
   1-(3-N,N-Dimethylaminocarbonylpyridin-2-yl-sulfonyl)-3-(4,6-dimethoxypyrimidin-2-yl)-harnstoff (Nicosulfuron),
   1-(3-Ethylsulfonylpyridin-2-yl-sulfonyl)-3-(4,6-dimethoxy-pyrimidin-2-yl)-harnstoff (DPX-E 9636, s. Brighton Crop Prot. Conf. - Weeds - 1989, S. 23 ff.),
   Pyridylsulfonylharnstoffe, wie sie in den deutschen Patentanmeldungen P 4000503.8 (HOE 90/F 006) und P 4030577.5 (HOE 90/F 293) beschrieben sind, vorzugsweise solche der Formel I oder deren Salze, 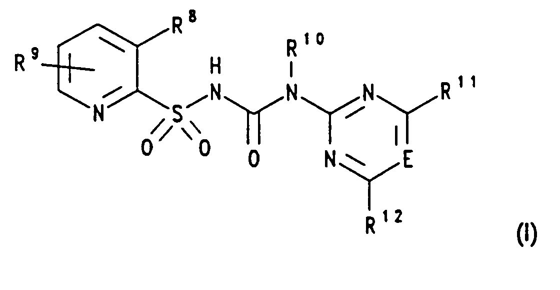 worin
   - E: CH oder N, vorzugsweise CH,
   - R⁸: Iod oder NR¹³R¹⁴,
   - R⁹: Wasserstoff, Halogen, Cyano, (C₁-C₃₎-Alkyl, (C₁-C₃)-Alkoxy, (C₁-C₃)-Haloalkyl, (C₁-C₃)-Haloalkoxy, (C₁-C₃)-Alkylmercapto, (C₁-C₃)-Alkoxy-(C₁-C₃)-alkyl, (C₁-C₃)-Alkoxy-carbonyl, Mono- oder Di-(C₁-C₃)-alkyl-amino, (C₁-C₃)-Alkyl-sulfinyl oder -sulfonyl, SO₂-NR^{a}R^{b} oder CO-NR^{a}R^{b}, insbesondere H
   - R^{a},R^{b}: unabhängig voneinander Wasserstoff, (C₁-C₃)-Alkyl, (C₁-C₃)-Alkenyl, (C₁-C₃)-Alkinyl oder zusammen -(CH₂)₄-, -(CH₂)₅- oder (CH₂)₂-O-(CH₂)₂-,
   - R¹⁰: H oder CH₃,
   - R¹¹: Halogen, (C₁-C₂)-Alkyl, (C₁-C₂)-Alkoxy, (C₁-C₂)-Haloalkyl, vorzugsweise CF₃, (C₁-C₂)-Haloalkoxy, vorzugsweise OCHF₂ oder OCH₂CF₃,
   - R¹²: (C₁-C₂)-Alkyl, (C₁-C₂)-Haloalkoxy, vorzugsweise OCHF₂, oder (C₁-C₂)-Alkoxy, und
   - R¹³: (C₁-C₄)-Alkyl und R¹⁴ (C₁-C₄)-Alkylsulfonyl oder R¹³ und R¹⁴ gemeinsam eine Kette der Formel -(CH₂)₃SO₂- oder -(CH₂)₄SO₂- bedeuten, z.B. 3-(4,6-Dimethoxypyrimidin-2-yl)-1-(3-N-methylsulfonyl-N-methylaminopyridin-2-yl)-sulfonylharnstoff,
B6) Alkoxyphenoxysulfonylharnstoffe, wie sie in EP-A-0342569 beschrieben sind, vorzugsweise solche der Formel II oder deren Salze, 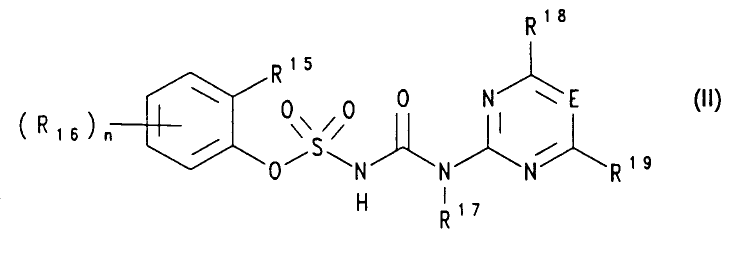 worin
   - E: CH oder N, vorzugsweise CH,
   - R¹⁵: Ethoxy, Propoxy oder lsopropoxy,
   - R¹⁶: Wasserstoff, Halogen, Nitro, CF₃, CN, (C₁-C₄)Alkyl, (C₁-C₄)-Alkoxy, (C₁-C₄)-Alkylmercapto oder (C₁-C₃)-Alkoxy-carbonyl, vorzugsweise in 6-Position am Phenylring,
   - n: 1, 2 oder 3, vorzugsweise 1,
   - R¹⁷: Wasserstoff, (C₁-C₄)-Alkyl oder (C₃-C₄)-Alkenyl,
   - R¹⁸,R¹⁹: unabhängig voneinander Halogen, (C₁-C₂)-Alkyl, (C₁-C₂)-Alkoxy, (C₁-C₂)-Haloalkyl,C₁-C₂-Haloalkoxy oder (C₁-C₂)-Alkoxy-(C₁-C₂)-alkyl, vorzugsweise OCH₃ oder CH₃, bedeuten, z.B. 3-(4,6-Dimethoxypyrimidin-2-yl)-1-(2-ethoxyphenoxy)-sulfonylharnstoff,
   und andere verwandte Sulfonylharnstoffderivate und Mischungen daraus.

Der Gehalt an Sulfonylharnstoffderivaten, vorzugsweise in Sulfondiamid-Derivaten wie Amidosulfuron beträgt vorzugsweise 0,1 - 60 Gew.-%, insbesondere 1 - 45 Gew.-%.

Als Tenside kommen insbesondere diejenigen Polyacrylsäurederivate in Frage, wie sie beispielsweise unter den Handelsnamen ®Sokalan CP10 (BASF), der ®Geropon-Reihe (HB, DA, DG) (Rhone Poulenc) bzw. ®Dispersant-Reihe (Rhone Poulenc) oder der ®Degapas-Reihe (Degussa) zu erhalten sind.

Bei ®Sokalan CP10 handelt es sich um ein modifiziertes Na-Polyacrylat mit niedriger molarer Masse, das nach einem speziellen Polymerisationsverfahren hergestellt wird. (BASF Techn. Info TI/P 3039 d von 1988.)

Bei den ®Geropon-Typen HB, DA und DG bzw. ®Dispersant HB und FB handelt es sich gemäß Rhone-Poulenc-Datenblatt von 1979 bzw. 1989 um Alkalipolyacrylate, die sowohl in flüssiger wie fester Form angeboten werden.

Auch bei der ®Degapas-Reihe handelt es sich um Alkali- bzw. Ammoniumsalze von Polyacrylsäurederivaten.

Diese Polyacrylsäurederivate können vorzugsweise in einem Bereich von 0,5 - 30 Gew.-%, insbesondere jedoch von 0,5 - 20 Gew.-% eingesetzt werden.

Die erfindungsgemäßen Zubereitungen können als zusätzliches Tensid, das die Dispergiereigenschaften der fest suspendierten Partikel zu verbessern hilft, aber nicht essentiell ist, ein Dodecyl- oder Tridecylbenzolsulfonat in einem Anteil von 0,01 - 12 Gew.-% enthalten. So kann beispielsweise ®Maranil (Dodecylbenzolsulfonat-Na-Salz) von Henkel als Paste oder Pulver eingesetzt werden.

Weiterhin können noch zusätzlich bis zu 25 Gew.-%, vorzugsweise bis zu 15 Gew.-% handelsüblicher Hilfsmittel zugesetzt werden, wie Netzmittel, Dispergiermittel, Entschäumer, Verdicker, Konservierungsmittel und Frostschutzmittel.

Als zusätzliche Netz- und Dispergiermittel kommen beispielsweise Tributylphenolpolyglykolether, wie die ®Sapogenat T-Marken (Hoechst) oder Nonylphenolpolyglykolether, wie die ®Arkopal N-Marken (Hoechst) in Frage.

Geeignete Entschäumer sind beispielsweise solche auf Siliconbasis wie aus der ®Silcolapse-Reihe (Rhone Poulenc) oder Antischaummittel SH (Wacker).

Verdickungsmittel können anorganischer oder organischer Natur sein; sie können auch kombiniert werden. Geeignet sind z. B. solche auf Aluminium-, Xanthan-, Methylcellulose-, Polysaccharid-, Erdalkalisilikat-, Gelatine- und Polyvinylalkohol-Basis, wie beispielsweise ®Bentone EW, ®Veegum, ®Rhodopol 23 oder ®Kelzan S. Wenn nötig, finden Konservierungsmittel, beispielsweise auf Formaldehyd-, Benzoesäure- und Triphenylzinn-Basis Verwendung, wie z.B. ®Kobate C.

Weiterhin können auch Frostschutzmittel, wie Harnstoff, Salze, Polyole (z. B. Glykol, Propylenglykol oder Glycerin) oder Zucker zugesetzt werden.

Die Erfindung betrifft weiterhin ein Verfahren zur Bekämpfung von unerwünschten Pflanzenwuchs, der dadurch gekennzeichnet ist, daß man eine erfindungsgemäße Zubereitung auf Pflanzen, Pflanzensamen oder die Anbaufläche appliziert.

Die folgenden Beispiele 1 - 22 (Tabelle 1) dienen zur Erläuterung der erfindungsgemäßen herbiziden Zubereitungen, ohne daß die Erfindung darauf beschränkt wäre. Die Herstellung der Suspensionen wird in der dem Fachmann üblichen Weise durch Naßvermahlung durchgeführt (Mengenangaben sind in Gew.-%). Die Abbauraten sind im unteren Teil der Tabellen angegeben.

Bei den Beispielen 18 und 19 handelt es sich um Mischformulierungen von lsoproturon und Amidosulfuron, die nach 5 Monaten bei Raumtemperatur (RT) einen Gehalt von 1,47 bzw. 1,46 % Amidosulfuron bei einem Ausgangswert von 1,5 % haben, bei 40 °C beträgt der Gehalt nach 3 Monaten 1,40 bzw. 1,42 %. Das Beispiel 20 ist eine Mischung einer handelsüblichen ®Arelon-Dispersion (DE-A-2 924 403) und einem Anteil von Amidosulfuron-Dispersion gemäß Beispiel 2 aus Tabelle 1. Es wurden 81,7 % ®Arelon-Dispersion, 6 % Amidosulfuron-Dispersion (Beispiel 2) und 12,3 % Wasser gut gemischt und gelagert. Hier findet ein Abbau bei 40 °C nach 3 Monaten auf 1,11 % statt und nach 3 Monaten bei 50 °C ist der Gehalt < 0,1 %, während bei den Beispielen 18 und 19 immerhin noch 0,4 bzw. 0,49 % nach 3 Monaten 50 °C nachweisbar waren.

Neben der Möglichkeit, eine stabile wäßrige Formulierung von Sulfonylharnstoffen in der hier beschriebenen Art herzustellen, ist es auch möglich, in derselben Art Mischformulierungen von Sulfonylharnstoffen mit anderen biologisch wirksamen Stoffen herzustellen. Besonders sinnvoll ist dies, wenn mit Zugabe von einem oder mehreren weiteren Wirkstoffen eine Verbreiterung des biologischen Wirkungsspektums erreicht werden kann oder gar Synergismus auftritt. Vor allem kommen hier in Frage herbizid wirksame Stoffe wie Phenylharnstoffderivate bekannt unter den common names (Pesticides Manual) lsoproturon, Linuron, Monolinuron, Monuron, Diuron, Neburon, Chlortoluron, Fluometuron, Chlorbromuron, Chloroxuron, Fenuron, Siduron, Terbuthiuron, Tetrafluron und Metoxuron.

Als weitere sind zu erwähnen solche aus der Klasse der Triazine wie Tributylazin, Terbutryn, Simetryn, Simazin, Secbumeton, Propazin, Prometryn, Procyazin, Metribuzin, Cyprazin, Cyanazin, Atrazin, Prometon, Hexazinon, Amitrol, Dipropetryn, Desmetryn und Ametryn. Weiter kommen in Frage Pendimethalin, Trifluralin, CMPP, MCPA, 2, 4, D, Glufosinate, Glyphosate, Nitrofen, Bifenox, Diclofop, loxynil, Bromoxynil, Paraquat, Ethalfluralin, Ethofumesate, Diflufenican, Metolachlor, Alachlor, Acifluorfen, Methalpropalin, Nitralin, Nitrofluorfen, Fluoroglycofen, Oxyfluorfen, Profluralin, Propachlor, 2, 4-DB 2, 4-DP und Bentazon.

Diese Formulierungen können sowohl in Form von reinen Mischdispersionen als auch als Suspoemulsionen, wie sie beispielsweise in EP-A-117 999 und EP-A-261 492 beschrieben sind, formuliert werden.

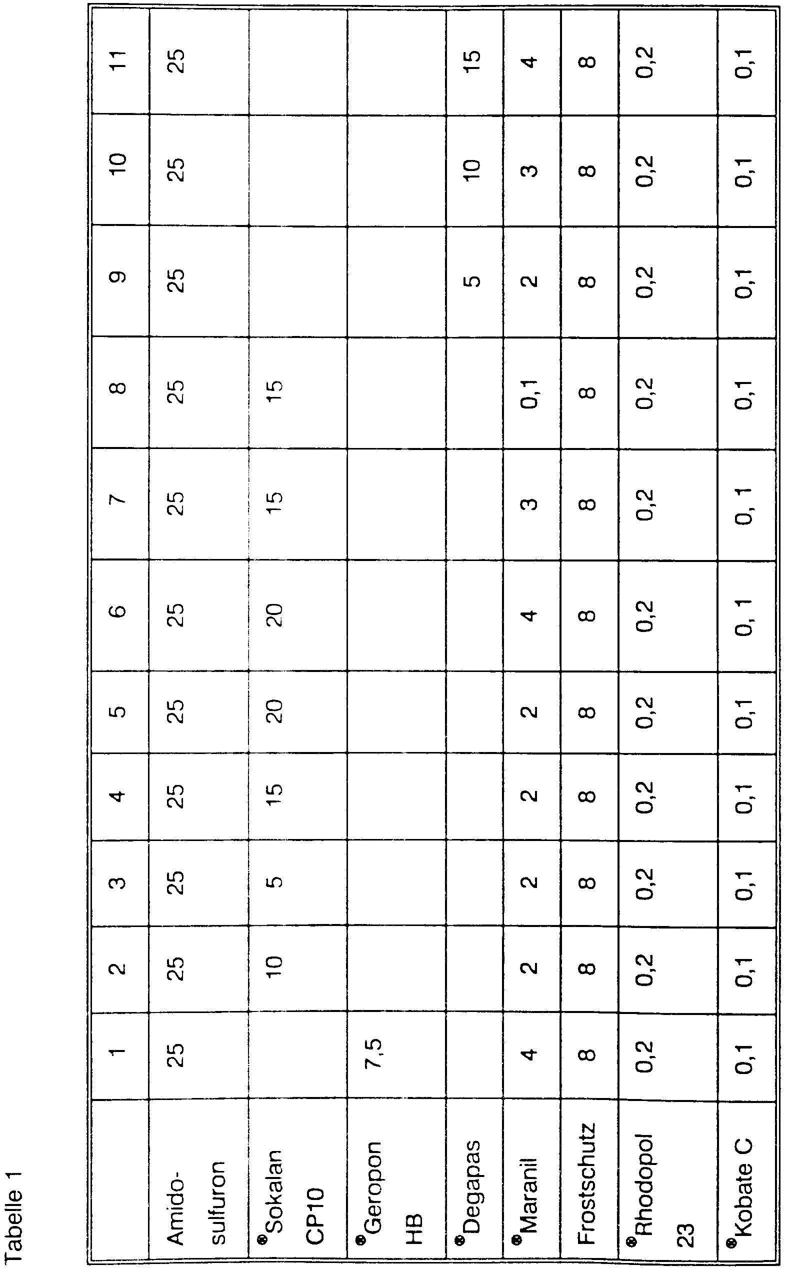

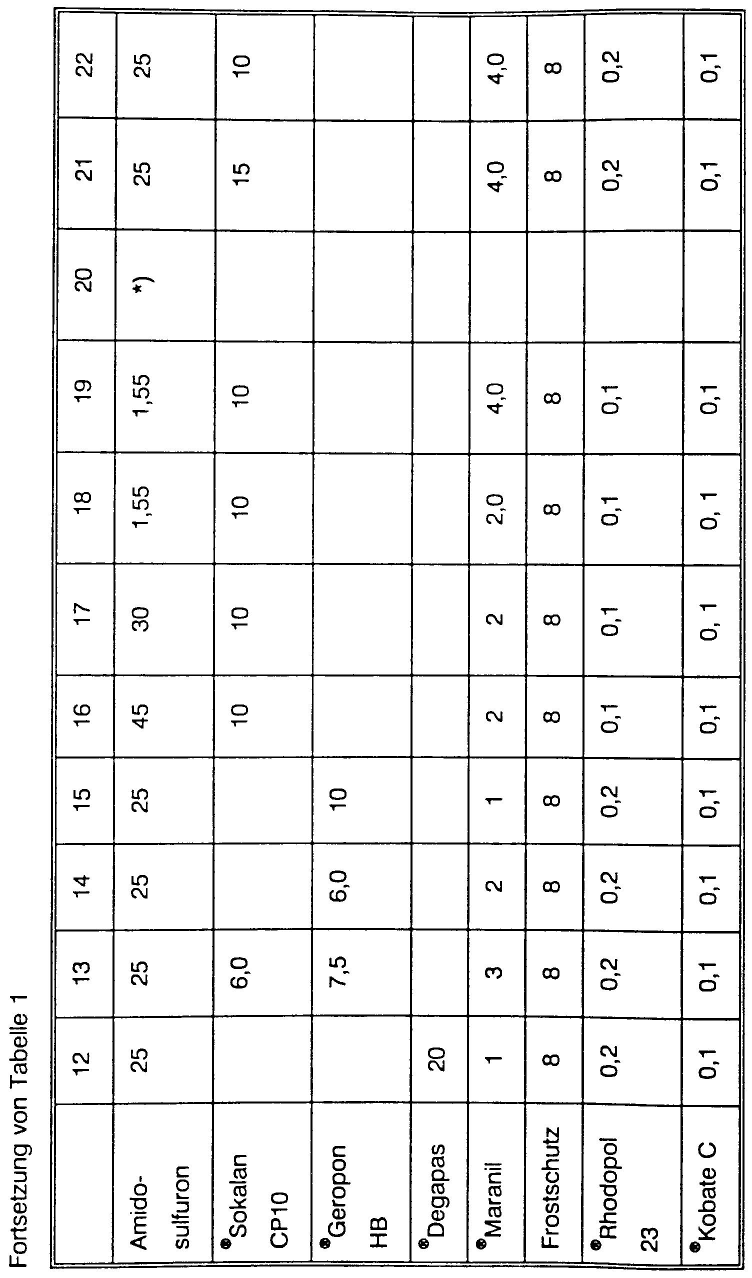

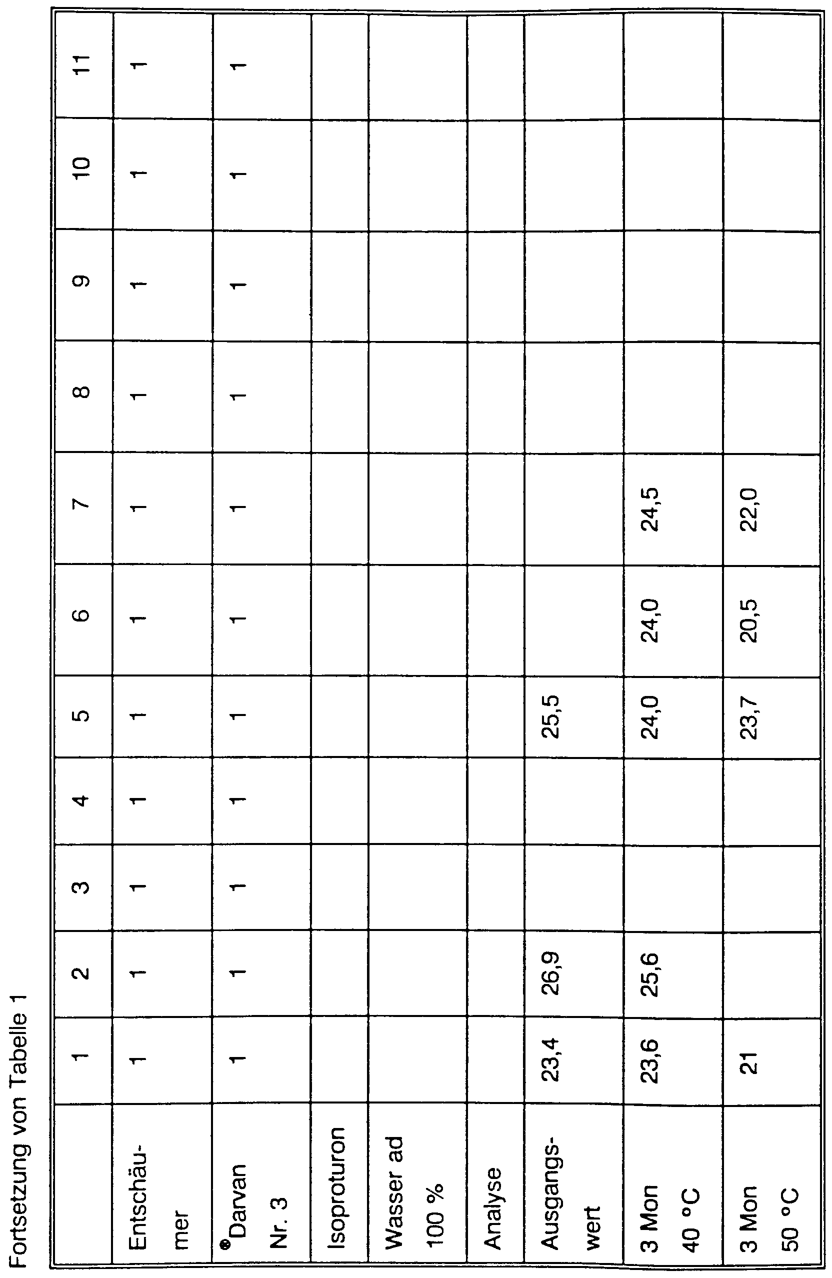

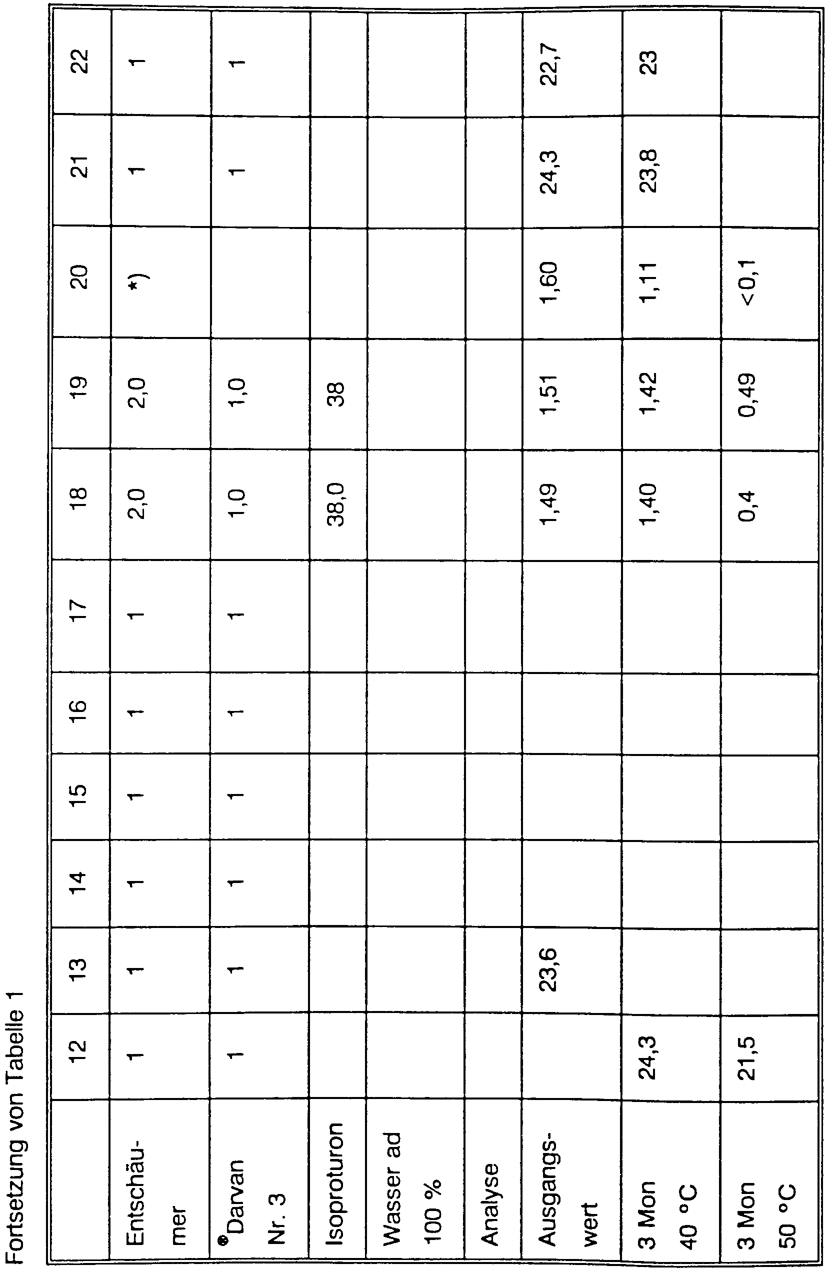

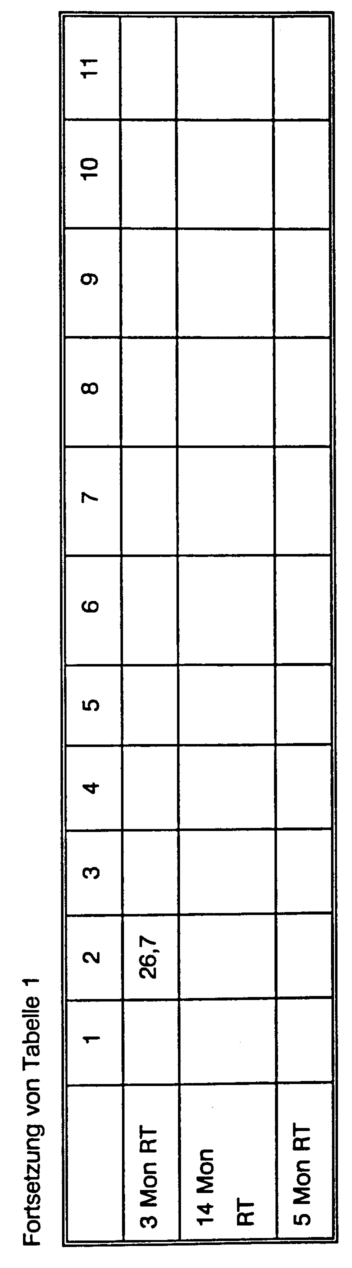

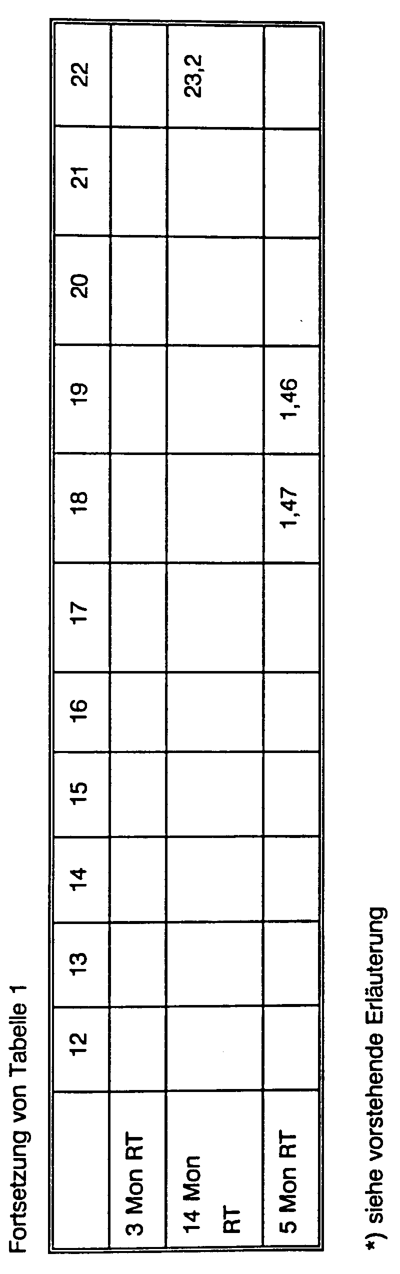

Bei den Beispielen der folgende Tabelle 2 handelt es sich um Vergleichsbeispiele, in welchen stabilitätsentscheidende Tenside aus der Klasse der Polyacrylate gegen andere handelsübliche Tenside ausgetauscht wurde.

Diese Beispiele zeigen, daß im Beispiel 1a die Dispersion physikalisch nahezu stabil war, aber chemischer Abbau eingetreten ist bei 3-monatiger Lagerung bei 50 °C um 21,4 % auf 27,5 %. Beispiel 5a war nicht mahlbar. Beispiel 3a war nach 1 Monat physikalische instabil und hat auf 39,9 % abgebaut; ebenso Beispiel 6a mit einem Abbau auf 37,2 %. Beispiel 4a war nach 2 Monaten instabil und hat auf 37,7 % abgebaut. Beispiel 2a ist ebenfalls nach einem Monat 50 °C instabil und hat auf 38,8 % abgebaut.

Dagegen zeigen die in Tabelle 1 aufgeführten, erfindungsgemäßen Beispiele gute Stabilitätsraten selbst bei 3 Monaten bei 50 °C. Beispiel 22 zeigt nach 14 Monaten RT noch keinen deutlichen Abbau mit 23,2 % bei einem Ausgangswert von 22,7 % innerhalb der Analysenfehlerrate.

**Tabelle 2**

| | 1a | 2a | 3a | 4a | 5a | 6a |
|---|---|---|---|---|---|---|
| Amidosulfuron | 35 | 45 | 45 | 45 | 45 | 45 |
| ®Orotan 850 | | 6,0 | | | | |
| ®Berol 733 | | | | 10 | 15 | 5 |
| ®Soprophor 3D33 | | 3 | | | | |
| ®Genapol X 060 | | 2 | | | | |
| ®Genapol X 080 | 1 | | 1 | 1 | | |
| ®Vanisperse CB | 5 | | | 5 | | 5 |
| ®Darvan Nr. 3 | 1 | | 1 | 1 | 1 | 1 |
| Frostschutz | 8 | 8 | 8 | 8 | 8 | 8 |
| Verdicker | 0,1 | | 0,1 | 0,1 | 0,1 | 0,1 |
| Konservierung | | | | | | |
| Entschäumer | 1 | 1 | 1 | 1 | 1 | 1 |
| ®Borresperse 3A | | | 5 | | | |
| ®Vanicell P | | | | | 5 | |
| H₂O ad 100 | | | | | | |
| Abbau nach | | | | | | |
| 1 Mon 50 °C | - 5,5 % | - 6,2 % | - 5,1 % | | Bei | - 7,8 % |
| 2 Mon 50 °C | - 19,3 % | | | - 7,3 % | Mahlung | |
| 3 Mon 50 °C | - 21,4 % | | | | fest | |
| Stabilität | < 3 Mon | < 1 Mon | < 1 Mon | < 2 Mon | | < 1 Mon |

## Patentansprüche (Patentansprüche für folgende(n) Vertragsstaat(en): AT, BE, CH, LI, DE, DK, FR, GB, GR, IT, NL, PT, SE)

1. Wäßrige herbizide Zubereitung, enthaltend 0,1 - 60 Gew.-% mindestens eines herbiziden Wirkstoffs aus der Sulfonylharnstoff-Reihe und 0,5 - 30 Gew.-% mindestens eines Tensids aus der Klasse der Polyacrylsäurederivate.

2. Zubereitung gemäß Anspruch 1, enthaltend 1 - 45 Gew.-% mindestens eines herbiziden Wirkstoffs aus der Sulfonylharnstoff-Reihe und 0,5 - 20 Gew.-% mindestens eines Polyacrylsäurederivats.

3. Zubereitung gemäß Anspruch 1 oder 2, zusätzlich enthaltend
0,01 - 12 Gew.-% eines Dodecyl- oderTridecylbenzolsulfonats und 0 - 25 Gew.-% üblicher Hilfsmittel aus der Reihe der Netzmittel, Dispergiermittel, Entschäumer, Verdicker, Konservierungsmittel und Frostschutzmittel.

4. Zubereitung gemäß einem der Ansprüche 1 bis 3, zusätzlich enthaltend
0,1 - 9 Gew.-% eines Dodecyl- oderTridecylbenzolsulfonats und 0 - 15 Gew.-% üblicher Hilfsmittel aus der Reihe der Netzmittel, Dispergiermittel, Entschäumer, Verdicker, Konservierungsmittel und Frostschutzmittel.

5. Zubereitung gemäß einem der Ansprüche 1 bis 4, enthaltend mindestens einen Wirkstoff aus der Reihe der Sulfondiamid-Derivate, vorzugsweise Amidosulfuron.

6. Zubereitung gemäß einem der Ansprüche 1 bis 5, dadurch gekennzeichnet, daß sie in Form einer Suspension vorliegt.

7. Zubereitung gemäß einem der Ansprüche 1 bis 5, dadurch gekennzeichnet, daß sie in Form einer Suspoemulsion vorliegt.

8. Verfahren zur Herstellung einer Zubereitung gemäß einem der Ansprüche 1 bis 7, dadurch gekennzeichnet, daß man die Bestandteile zusammengibt und naßvermahlt.

9. Verwendung einer Zubereitung gemäß einem der Ansprüche 1 bis 7 zur Bekämpfung von unerwünschtem Pflanzenwuchs.

10. Verfahren zur Bekämpfung von unerwünschtem Pflanzenwuchs, dadurch gekennzeichnet, daß man eine Zubereitung gemäß einem der Ansprüche 1 bis 7 auf Pflanzen, Pflanzensamen oder die Anbaufläche appliziert.

## Patentansprüche (Patentansprüche für folgende(n) Vertragsstaat(en): ES)

1. Verfahren zur Herstellung einer wäßrigen herbiziden Zubereitung, enthaltend 0,1- 60 Gew.-% mindestens eines herbiziden Wirkstoffs aus der Sulfonylharnstoff-Reihe und 0,5 - 30 Gew.-% mindestens eines Tensids aus der Klasse der Polyacrylsäurederivate, dadurch gekennzeichnet, daß man die Bestandteile zusammengibt und naßvermahlt.

2. Verfahren gemäß Anspruch 1, dadurch gekennzeichnet, daß man eine Zubereitung herstellt, welche 1 - 45 Gew.-% mindestens eines herbiziden Wirkstoffs aus der Sulfonylharnstoff-Reihe und 0,5 - 20 Gew.-% mindestens eines Polyacrylsäurederivats enthält.

3. Verfahren gemäß Anspruch 1 oder 2, dadurch gekennzeichnet, daß man eine Zubereitung herstellt, welche zusätzlich 0,01 - 12 Gew.-% eines Dodecyl-oder Tridecylbenzolsulfonats und 0 - 25 Gew.-% üblicher Hilfsmittel aus der Reihe der Netzmittel, Dispergiermittel, Entschäumer, Verdicker, Konservierungsmittel und Frostschutzmittel enthält.

4. Verfahren gemäß einem der Ansprüche 1 bis 3, dadurch gekennzeichnet, daß man eine Zubereitung herstellt, welche zusätzlich 0,1 - 9 Gew.-% eines Dodecyl- oder Tridecylbenzolsulfonats und 0 - 15 Gew.-% üblicher Hilfsmittel aus der Reihe der Netzmittel, Dispergiermittel, Entschäumer, Verdicker, Konservierungsmittel und Frostschutzmittel enthält.

5. Verfahren gemäß einem der Ansprüche 1 bis 4, dadurch gekennzeichnet, daß man eine Zubereitung herstellt, welche mindestens einen Wirkstoff aus der Reihe der Sulfondiamid-Derivate, vorzugsweise Amidosulfuron enthält.

6. Verfahren gemäß einem der Ansprüche 1 bis 5, dadurch gekennzeichnet, daß man eine Zubereitung herstellt, welche in Form einer Suspension vorliegt.

7. Verfahren gemäß einem der Ansprüche 1 bis 5, dadurch gekennzeichnet, daß man eine Zubereitung herstellt, welche in Form einer Suspoemulsion vorliegt.

8. Verwendung einer gemäß einem der Ansprüche 1 bis 7 hergestellten Zubereitung zur Bekämpfung von unerwünschtem Pflanzenwuchs.

9. Verfahren zur Bekämpfung von unerwünschtem Pflanzenwuchs, dadurch gekennzeichnet, daß man eine Zubereitung gemäß einem der Ansprüche 1 bis 7 auf Pflanzen, Pflanzensamen oder die Anbaufläche appliziert.

## Claims (Claims for the following Contracting State(s): AT, BE, CH, LI, DE, DK, FR, GB, GR, IT, NL, PT, SE)

1. An aqueous herbicidal preparation comprising 0.1 - 60 % by weight of at least one herbicidal active substance from the sulfonylurea series and 0.5 - 30 % by weight of at least one surfactant from the class of the polyacrylic acid derivatives.

2. A preparation as claimed in claim 1, comprising 1 - 45 % by weight of at least one herbicidal active substance from the sulfonylurea series and 0.5 - 20 % by weight of at least one polyacrylic acid derivative.

3. A preparation as claimed in claim 1 or 2, additionally comprising
0.01 - 12 % by weight of a dodecyl- or tridecylbenzenesulfonate and 0 - 25 % by weight of conventional adjuvants from the series of the wetting agents, dispersants, defoamers, thickeners, preservatives and antifreeze agents.

4. A preparation as claimed in one of claims 1 to 3, additionally comprising
0.1 - 9 % by weight of a dodecyl- or tridecylbenzenesulfonate and 0 - 15 % by weight of conventional adjuvants from the series of the wetting agents, dispersants, defoamers, thickeners, preservatives and antifreeze agents.

5. A preparation as claimed in one of claims 1 to 4, comprising at least one active substance from the series of the sulfonediamide derivatives, preferably amidosulfuron.

6. A preparation as claimed in one of claims 1 to 5, which exists in the form of a suspension.

7. A preparation as claimed in one of claims 1 to 5, which exists in the form of a suspoemulsion.

8. A process for preparing a preparation as claimed in one of claims 1 to 7, which comprises combining the components and wet grinding the mixture.

9. The use of a preparation as claimed in one of claims 1 to 7 for controlling undesired vegetation.

10. A method of controlling undesired vegetation, which comprises applying a preparation as claimed in one of claims 1 to 7 to plants, seeds of plants or the area under cultivation.

## Claims (Claims for the following Contracting State(s): ES)

1. A process for preparing an aqueous herbicidal preparation comprising 0.1 - 60 % by weight of at least one herbicidal active substance from the sulfonylurea series and 0.5 - 30 % by weight of at least one surfactant from the class of the polyacrylic acid derivatives, which comprises combining the components and wet-grinding the mixture.

2. The process as claimed in claim 1, wherein a preparation is prepared which comprises 1 - 45 % by weight of at least one herbicidal active substance from the sulfonylurea series and 0.5 - 20 % by weight of at least one polyacrylic acid derivative.

3. The process as claimed in claim 1 or 2, wherein a preparation is prepared which additionally comprises 0.01 - 12 % by weight of a dodecyl- or tridecylbenzenesulfonate and 0 - 25 % by weight of conventional adjuvants from the series of the wetting agents, dispersants, defoamers, thickeners, preservatives and antifreeze agents.

4. The process as claimed in one of claims 1 to 3, wherein a preparation is prepared which additionally comprises 0.1 - 9 % by weight of a dodecyl- or tridecylbenzenesulfonate and 0 - 15 % by weight of conventional adjuvants from the series of the wetting agents, dispersants, defoamers, thickeners, preservatives and antifreeze agents.

5. The process as claimed in one of claims 1 to 4, wherein a preparation is prepared which comprises at least one active substance from the series of the sulfonediamide derivatives, preferably amidosulfuron.

6. The process as claimed in one of claims 1 to 5, wherein a preparation is prepared which exists in the form of a suspension.

7. The process as claimed in one of claims 1 to 5, wherein a preparation is prepared which exists in the form of a suspoemulsion.

8. The use of a preparation prepared as claimed in one of claims 1 to 7 for controlling undesired vegetation.

9. A method of controlling undesired vegetation, which comprises applying a preparation as claimed in one of claims 1 to 7 to plants, seeds of plants or the area under cultivation.

## Revendications (Revendications pour l'(les) Etat(s) contractant(s) suivant(s): AT, BE, CH, LI, DE, DK, GB, FR, GR, IT, NL, PT, SE)

1. Préparation herbicide aqueuse contenant de 0,1 à 60 % en poids d'au moins une matière active herbicide de la série des sulfonylurées, et de 0,5 à 30 % en poids d'au moins un tensioactif de la classe des dérivés du poly(acide acrylique).

2. Préparation selon la revendication 1, contenant de 1 à 45 % en poids d'au moins une matière active herbicide de la série des sulfonylurées et de 0,5 à 20 % en poids d'au moins un dérivé du poly(acide acrylique).

3. Préparation selon la revendication 1 ou 2, contenant en outre de 0,01 à 12 % en poids d'un dodécyl- ou tridécylbenzènesulfonate et de 0 à 25 % en poids de substances auxiliaires usuelles de la série des mouillants, des dispersants, des antimoussants, des épaississants, des conservateurs et des antigels.

4. Préparation selon l'une des revendications 1 à 3, contenant en outre de 0,1 à 9 % en poids d'un dodécyl- ou tridécylbenzènesulfonate et de 0 à 15 % en poids de substances auxiliaires usuelles de la série des mouillants, des dispersants, des antimoussants, des épaississants, des conservateurs et des antigels.

5. Préparation selon l'une des revendications 1 à 4, contenant au moins une matière active de la série des dérivés du sulfonediamide, de préférence l'amidosulfuron.

6. Préparation selon l'une des revendications 1 à 5, caractérisée en ce qu'elle se présente sous forme d'une suspension.

7. Préparation selon l'une des revendications 1 à 5, caractérisée en ce qu'elle se présente sous forme d'une suspo-émulsion.

8. Procédé pour fabriquer une préparation selon l'une des revendications 1 à 7, caractérisé en ce qu'on réunit les constituants et qu'on les broie par voie humide.

9. Utilisation d'une préparation selon l'une des revendications 1 à 7 pour la maîtrise d'une croissance indésirable des végétaux.

10. Procédé pour maîtriser une croissance indésirable de végétaux, caractérisé en ce qu'on applique une préparation selon l'une des revendications 1 à 7 sur des végétaux, des semences végétales ou sur la surface de culture.

## Revendications (Revendications pour l'(les) Etat(s) contractant(s) suivant(s): ES)

1. Procédé pour fabriquer une préparation herbicide aqueuse contenant de 0,1 à 60 % en poids d'au moins une matière active herbicide de la série des sulfonylurées, et de 0,5 à 30 % en poids d'au moins un tensioactif de la classe des dérivés du poly(acide acrylique), caractérisé en ce qu'on réunit les constituants et on les broie par voie humide.

2. Procédé selon la revendication 1, caractérisé en ce qu'on fabrique une préparation qui contient de 1 à 45 % en poids d'au moins une matière active herbicide de la série des sulfonylurées et de 0,5 à 20 % en poids d'au moins un dérivé du poly(acide acrylique).

3. Procédé selon la revendication 1 ou 2, caractérisé en ce qu'on fabrique une préparation qui contient en outre 0,01 à 12 % en poids d'un dodécyl- ou tridécylbenzènesulfonate et de 0 à 25 % en poids de substances auxiliaires usuelles de la série des mouillants, des dispersants, des antimoussants, des épaississants, des conservateurs et des antigels.

4. Procédé selon l'une des revendications 1 à 3, caractérisé en ce qu'on fabrique une préparation qui contient en outre de 0,1 à 9 % en poids d'un dodécyl- ou tridécylbenzènesulfonate et de 0 à 15 % en poids de substances auxiliaires usuelles de la série des mouillants, des dispersants, des antimoussants, des épaississants, des conservateurs et des antigels.

5. Procédé selon l'une des revendications 1 à 4, caractérisé en ce qu'on fabrique une préparation qui contient au moins une matière active de la série des dérivés du sulfonediamide, de préférence l'amidosulfuron.

6. Procédé selon l'une des revendications 1 à 5, caractérisé en ce qu'on fabrique une préparation se présentant sous forme d'une suspension.

7. Procédé selon l'une des revendications 1 à 5, caractérisé en ce qu'on fabrique une préparation se présentant sous forme d'une suspo-émulsion.

8. Utilisation d'une préparation fabriquée selon l'une des revendications 1 à 7, pour la maîtrise d'une croissance indésirable des végétaux.

9. Procédé pour maîtriser une croissance indésirable de végétaux, caractérisé en ce qu'on applique une préparation selon l'une des revendications 1 à 7 sur des végétaux, des semences végétales ou sur la surface de culture.
